# EUROPEAN PATENT SPECIFICATION

(11) **EP 4 261 019 B1**
(45) Date of publication and mention of the grant of the patent: **04.03.2026**
(21) Application number: 23167559.6
(22) Date of filing: 12.04.2023
(51) Int. Cl.: B29C 65/20, B29C 65/78, B23C 3/12, B26D 1/00, E06B 3/22, E06B 3/62

(54) **METHOD, PLANT AND TOOL DEVICE FOR PROCESSING PROFILED BARS**
VERFAHREN, ANLAGE UND WERKZEUG ZUR BEARBEITUNG VON PROFILSTÄBEN
PROCÉDÉ, INSTALLATION ET OUTILLAGE POUR PRÉPARER DES BARRES PROFILÉES

(30) Priority: 13.04.2022 IT 202200007391
(43) Date of publication of application: 18.10.2023
(73) Proprietor: Emmegi S.p.A., 41019 Soliera (Modena) (IT)
(72) Inventor: CERA, Simone, 47522 Cesena (Forli'-Cesena) (IT)
(74) Representative: Colò, Chiara

(56) References cited:
- EP-A2- 0 900 907
- EP-A2- 0 978 339
- EP-A2- 3 090 858
- WO-A1-2021/024111
- DE-U1- 202015 101 493

## Description

The invention relates to a method, a plant and a tool device to be used for processing profiled bars made of a material which contains at least a synthetic polymeric material, in particular, but not exclusively, for processing profiled bars made of polyvinyl chloride (PVC). More specifically, the invention is intended to be applied in the field of processing profiled bars for making doors or window frames.

Plants are known for forming door or window frames from profiled bars made of synthetic polymeric material, for example PVC. The known plants comprise a welding machine, for example of the type disclosed in European patent application EP 3517279, for joining by welding a plurality of profiled bars at respective end portions, so as to form corner zones of the frame.

Upstream of the welding machine, other machines may be provided which are suitable for performing preliminary working operations on the profiled bars, the preliminary working operations being necessary for making the frame, in particular cutting and milling operations. The cutting operations make it possible to obtain, from a profiled bar having a significant length, a plurality of shorter profiled bars, having a length suitable for forming the door or window frame. The milling operations, on the other hand, may allow material to be removed in an end portion of the profiled bars cut previously, so as to make, along a perimeter zone of the end portion, a seat intended to receive a welding bead which will be originated on the welding machine, in such a way as to prevent the welding bead from protruding towards the outside of the corner zone of the frame, which would not be aesthetically attractive. These milling operations in an end portion of the profiled bar are also known as contouring operations.

The above-mentioned cutting and milling operations may be performed in sequence in a single machining centre, or they may be performed at different times, respectively on cutting machines and contouring machines. Both the machining centre and the cutting machines and the contouring machines may be arranged in the same production line in which the welding machine is present or they may be arranged in a place different from that in which the welding machine is located.

The profiled bars intended to form door or window frames may comprise one or more longitudinal seals, made, for example, of rubber, fixed on an outer surface of the profiled bars in predetermined positions. The longitudinal seals are intended to ensure that the door or window frame is able to close in an effective manner the door or window in which the frame will be installed.

The mechanical working operations, for example cutting or milling operations, carried out on profiled bars having longitudinal seals, may result in several drawbacks, especially in the case of longitudinal seals having a cross-section of significant dimensions or made with a particularly soft elastomeric material.

When a tool, for example a blade or a cutter intended to operate on the PVC with which the profiled bar is made, interacts with the seal, the latter may be torn. If this occurs, pieces of seal may remain attached to the profiled bar, which can cause imperfections during the subsequent welding of the profiled bars or may create difficulties while installing the frame, for example when a glass panel is mounted on the frame.

Another drawback which may occur when profiled bars are welded on which seals are applied, even if the seals have been correctly cut and do not have portions partly detached, is linked to the fact that, during welding, the facing end zones of two profiled bars to be joined are locally melted or softened and pressed against each other. As a result, the profiled bars shorten by a few millimetres during the welding operations. When this occurs, the material of the seals, which behaves differently from the PVC or other polymeric material with which the profiled bars are formed, gives rise to an excess of material which may crystallize during heating. This excess material may be annoying during the subsequent operations to which the frame has to be subjected, for example when a glass panel has to be applied on the frame, or when a door or a window shutter made starting from the frame has to be closed.

Prior art documents EP0978339, WO2021/024111, EP0900907, EP3090858, DE202015101493 U1 disclose some examples of apparatuses for processing profiled bars.

An object of the invention is to improve the methods, the plants and the tools for processing profiled bars made of a material which comprises at least one synthetic polymer, for example profiled bars made of PVC.

Another object is to increase the quality of the door and window frames made from profiled bars made of a material which comprises at least one synthetic polymer, for example profiled bars made of PVC, on which seals are applied.

A further object is to provide bars made of a material which comprises at least one synthetic polymer, for example PVC, in which no pieces of seals having significant dimensions remain attached to the profiled bar after cutting or milling operations are performed on the latter.

Another object is to provide profiled bars intended to be joined by welding to form door and window frames, in which the profiled bars are provided with seals and in which, even after welding, there is no build-up of material forming the seals.

In a first aspect of the invention, there is provided a method comprising the steps of:
- preparing a profiled bar made of a material containing a synthetic polymer, at least one seal being applied on the profiled bar;
- joining the profiled bar to at least a further profiled bar, by welding, to obtain a sealed joint of a door or window frame;
wherein, before the joining step, there is provided a step of cutting at least a part of the seal, the step of cutting being performed with a dedicated rotary tool specifically arranged to act on the seal.

Owing to this aspect of the invention, it is possible to selectively remove portions of seal with a dedicated tool, that is to say, with a tool specifically designed for acting on the material of the seal, so as to cut that material without leaving shreds or frayed parts. The material of the seal is usually an elastomeric material. Any operations, for example milling, to be performed on the profiled bar, that is to say, on the material containing at least one synthetic polymer, will be performed with a different tool, which shall not interact with the seal.

This avoids cutting of the seal with the same tool which processes the profiled bar, which would generate defective cut edges on the seal. This makes it possible to limit the defects which could arise during subsequent processing steps, due to the seal being cut incorrectly.

The step of cutting at least a part of the seal by the dedicated rotary tool may be performed after the seal has already been cut to the desired length to form the door or window frame.

In an embodiment, the dedicated rotary tool comprises a circular blade having a smooth cutting profile.

This allows the seal to be effectively cut, minimising or eliminating the defects linked to the cut.

In an embodiment, the dedicated rotary tool is used to remove a part of the seal applied to a region of the profiled bar in which a working operation will be subsequently performed, said working operation resulting in removal of the material containing a synthetic polymer with which the profiled bar is made.

This ensures that, in the zone in which a further tool specifically intended for removing the material of the profiled bar will work, no large portions of seal are present. Consequently, the interactions between the seal and the further tool which acts on the profiled bar are avoided, or at least minimised. These interactions are undesired since they could be responsible for edges of the seal cut in a defective manner.

In an embodiment, the dedicated rotary tool is used to remove a part of the seal applied to a region of the profiled bar in which a working operation has been performed, said working operation resulting in removal of the material containing a synthetic polymer with which the profiled bar is made.

This makes it possible to restore a good quality to a cut edge of the seal at the regions of the seal which have previously interacted with a tool which has performed the working operation on the profiled bar.

In both cases, the working operation which results in the chip removal may be a milling operation.

In an embodiment, the working operation which results in chip removal may be a contouring operation for forming, along an outer profile of an end section of the profiled bar, a seat intended to at least partly house a welding bead formed when the profiled bar is joined to the further profiled bar.

In an embodiment, the dedicated rotary tool is used to remove a part of the seal applied close to an end section of the profiled bar intended to be joined to the further profiled bar.

This prevents the end section of the profiled bar intended to be joined to the further profiled bar from having parts of seals with significant dimensions, which could result in an accumulation of material of the seal close to a welded joint which joins the two profiled bars. The accumulation of material of the seal is undesired since it could adversely affect the quality of the welded joint or make it more difficult to carry out subsequent operations.

In an embodiment, there is provided the step of moving the dedicated tool along a predetermined path to bring the dedicated tool to interact with the seal.

It is thus possible to decide in which manner the dedicated tool has to move towards the seal, how the cut has to be performed, on which side the seal has to be cut, and determine other working conditions, which makes the method according to the first aspect of the invention particularly flexible.

In a second aspect of the invention, there is provided a plant for forming door or window frames starting from profiled bars made with a material containing a synthetic polymer, the plant comprising a cutting unit for cutting a profiled bar to a desired length, a welding machine for joining a profiled bar to at least a further profiled bar by welding, the plant further comprising a tool device which includes a rotary tool for cutting at least a portion of a seal applied on the profiled bar.

In an embodiment, the rotary tool comprises a circular blade having a smooth cutting profile.

In an embodiment, the rotary tool may be configured to act on the seal without interacting with the material containing a synthetic polymer which forms the profiled bar.

Owing to the second aspect of the invention, it is possible to act on the seal, where portions are to be removed, with a dedicated tool, designed specifically for interacting with the material which forms the seal. The working operations, which may be milling or other, to be performed on the profiled bar, will be carried out with a further tool, specific for the material containing a synthetic polymer which forms the profiled bar.

In a third aspect of the invention, a tool device is provided for processing a profiled bar made of a material containing a synthetic polymer, the tool device comprising a first end intended to be fixed to a spindle of a machine tool, a milling cutter being arranged at a second end of the tool device for performing a milling operation on the profiled bar, the second end being opposite the first end, in which the tool device further comprises a rotatable circular blade interposed between the first end and the milling cutter for cutting a seal made of elastomeric material applied on the profiled bar.

The tool device according to the third aspect of the invention may be used successfully for processing profiled bars on which seals are applied.

In particular, the rotatable circular blade may be used for cutting portions of seals in zones in which subsequent operations have to be performed, for example working operations with removal of material to be performed by the milling cutter, or welding operations.

This makes it possible to obtain cut edges with a good quality in the seal and - if necessary - prevent accumulation of material of the seal at the zones to be welded.

The invention can be better understood and implemented with reference to the accompanying drawings which illustrate non-limiting example embodiments of it and in which:
Figure 1 is a schematic plan view of a plant for processing profiled bars to obtain door or window frames;
Figure 2 shows a cross section of a profiled bar and a rotary tool for cutting portions of seal applied on the profiled bar;
Figure 3 shows, in an enlarged scale, a cross-section of the profiled bar of

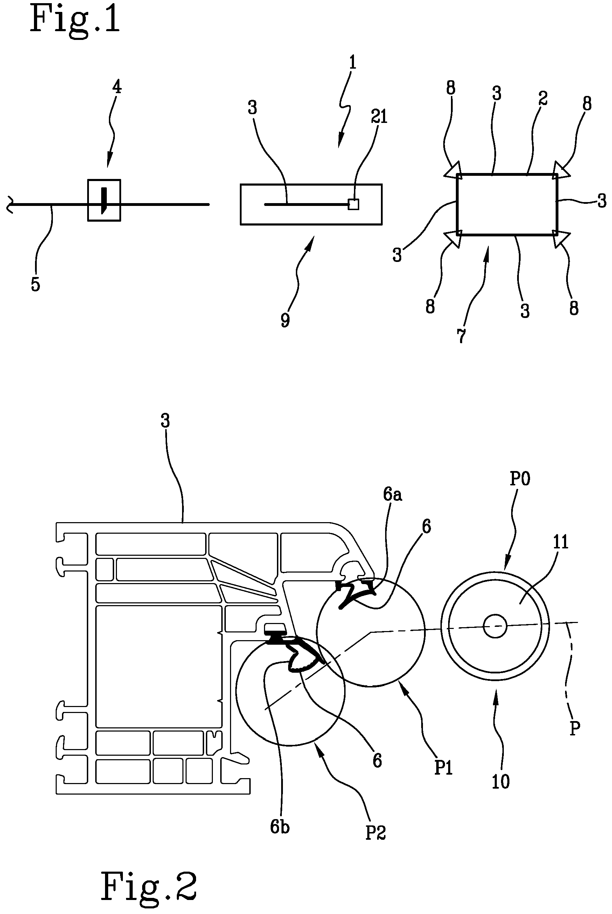

Figure 2, together with the rotary tool which is cutting the seal;

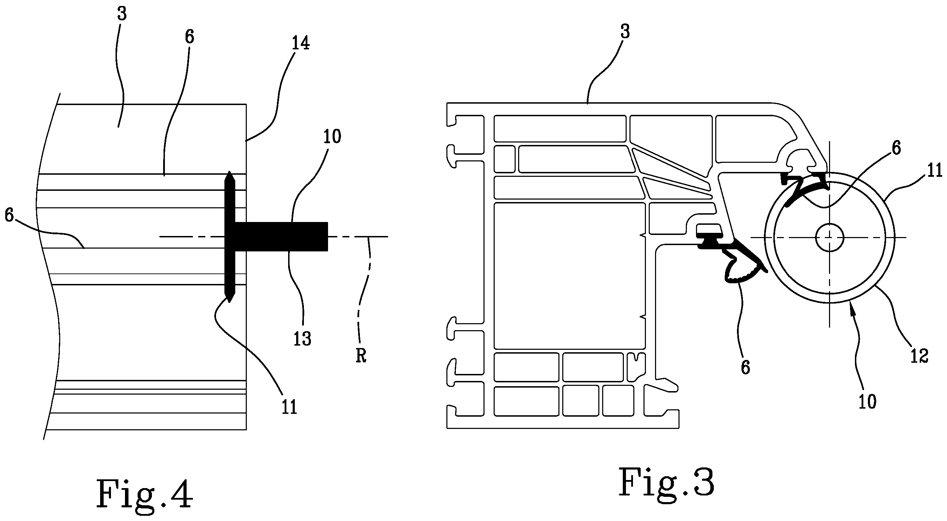

Figure 4 is a schematic side view from the left of Figure 3;

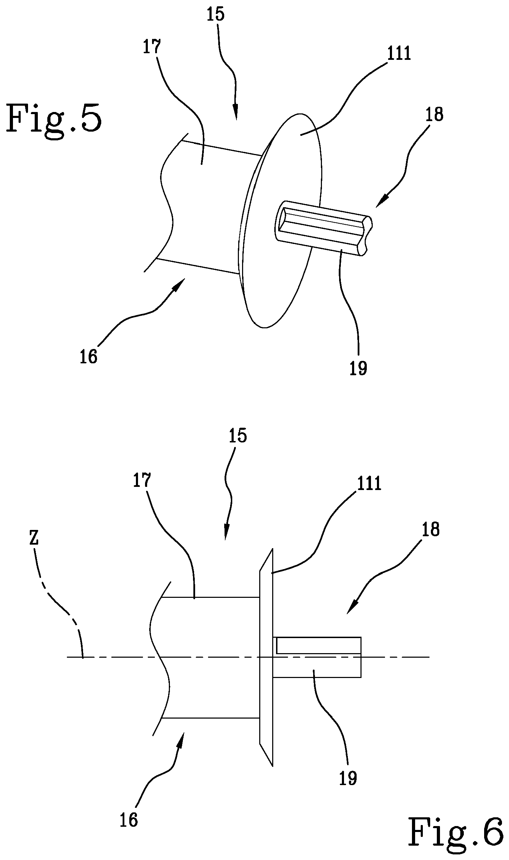

Figure 5 is a perspective view showing a tool device;
Figure 6 is a side view of the tool device of Figure 5;

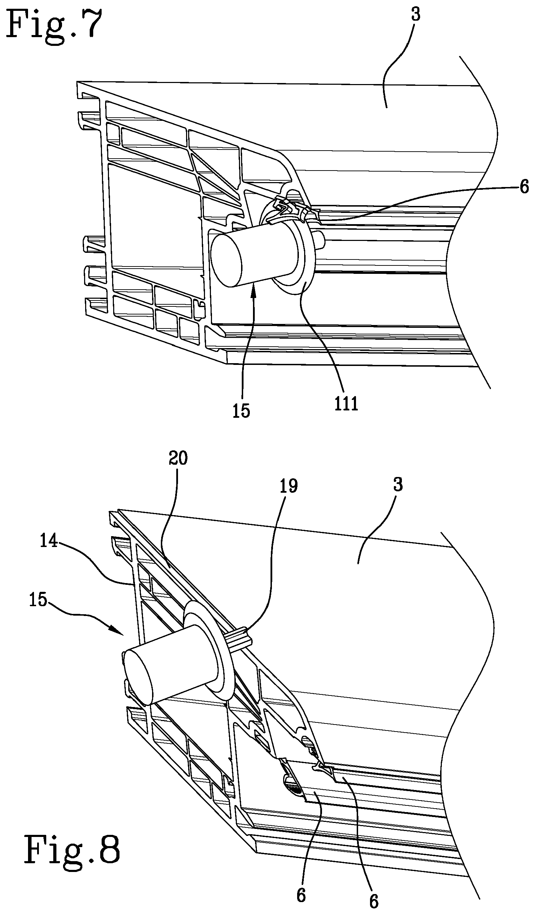

Figure 7 shows the tool device of Figure 5, whilst a rotary blade of the device is cutting a seal:
Figure 8 shows the tool device of Figure 5, whilst a milling cutter of the device is processing a profiled bar.
Figure 1 schematically shows a plant 1 for forming door or window frames 2 starting from profiled bars 3 made of a material containing a synthetic polymer.

The profiled bars 3 may be made entirely of a synthetic polymeric material, or they may comprise a synthetic polymeric material and another material, for example in the case of profiled bars made of composite material.

In general, the profiled bars 3 may be made of any heat-weldable material. One or more seals 6 may be applied on the profiled bars 3, each of which normally extends in a longitudinal direction, that is to say, parallel to the length of the profiled bars 3. The seals 6 may be made with an elastomeric material. The seals 6 are used to ensure that the doors and windows of which the frames 2 form part close without allowing draughts and currents of air to pass.

The seals 6 are fixed to the profiled bars 3, for example by gluing or because they have been formed directly in contact with the profiled bars 3, for example by coextrusion.

The plant 1 comprises a cutting unit 4, which receives at its inlet an extruded semi-finished product 5, on which there are already one or more seals 6, having a length greater than the length of the profiled bars 3 which are used to form the frame 2. The cutting unit 4 is configured for cutting the extruded semi-finished product 5 so as to obtain from it profiled bars 3 of the desired length.

The plant 1 further comprises a welding machine 7, arranged to join together by heat-welding a plurality of profiled bars 3, for example four profiled bars 3, in such a way as to form a frame 4. For this purpose, the welding machine 7 may comprise four welding heads 8, each of which is arranged to join together two profiled bars 3 at a corner zone of the frame 4. The welding machine 7 will not be described in detail here, because it is of known type. For example, the welding machine 7 may be of the type disclosed in European patent application EP 3517279.

The plant 1 may further comprise a working unit 9 comprising a working device 21 for performing additional working operations on the profiled bars 3, after the latter have been cut to the desired length and before they are welded to each other. The working device 21 may be, for example, configured to perform an operation which results in chip removal on the profiled bars 3. For example, the working device 21 could be configured to perform, on an end section of each profiled bar 3, a perimeter milling operation aimed at forming, along the profile of the end section, a seat suitable for receiving a welding bead which is generated when two profiled bars 3 are joined on the welding machine 7.

In the example shown, the working unit 9 is interposed between the cutting unit 4 and the welding machine 7, but this condition is not necessary.

The working device 21 is configured to perform working operations at least on the seals 6 applied to the profiled bars 3, in particular by removing portions of the seals 6 in positions in which the material of the seals 6 could give rise to subsequent drawbacks.

The working device 21 may comprise a rotary tool 10 of the type shown in Figures 2 to 4. The rotary tool 10 may be shaped like a circular blade 11 rotatable about an axis of rotation R, shown in Figure 4. The rotary tool 10 is configured to be rotated about the axis of rotation R by an electro-spindle (not illustrated), which engages with a shank 13 of the rotary tool 10.

The circular blade 11 may have a smooth cutting profile 12, that is to say, not serrated and without teeth.

The circular blade 11 is made of a material for sharp tools, which are able to cut elastomeric materials. The circular blade 11 may be, for example, made of steel.

The working unit 9 comprises a controller, not illustrated, for controlling the movement of the rotary tool 10. The controller is configured for activating or deactivating the rotary tool 10 and for setting operating parameters of the rotary tool 10. Moreover, the controller is configured for moving the rotary tool 10 along a predetermined path in order to bring the rotary tool 10 to interact with the seal 6 and then move the rotary tool 10 away from the seal 6.

For example, in the case of Figure 2, the rotary tool 10 is controlled in such a way as to be moved along a path P indicated with a dot-dashed line. The rotary tool 10 is initially in a rest position P0, spaced from the profiled bar 3.

According to this example, the profiled bar 3 comprises two seals 6, that is to say, a first seal 6a and a second seal 6b arranged at different positions.

The rotary tool 10 is moved to be carried to a first operating position P1, indicated schematically in Figure 2, so as to interact with the first seal 6a applied on the profiled bar 3. The rotary tool 10 can be brought to the first working position P1 for example by moving the rotary tool 10 along a horizontal portion of path. At this point, the rotary tool 10 performs the necessary operation on the first seal 6a. The rotary tool 10 is then moved to a second working position P2, in order to interact with the second seal 6b. According to the example shown, the rotary tool 10 is moved from the first working position P1 to the second working position P2 along a rectilinear and inclined portion of path.

Figure 2 shows only one example of how the rotary tool 10 can be moved. In general, the number, the position and the geometry of the seals 6 may be different from that shown in Figure 2, as well as the path P of the rotary tool 10 and the shape and dimensions of the cross-section of the profiled bar 3.

The rotary tool 10 may be controlled in such a way as to optimise the path which the rotary tool 10 follows to perform the working operations requested on the seals 6 of the profiled bars 3, depending on the configuration of each profiled bar 3 and the respective seal(s) 6.

The rotary tool 10 may be configured to perform working operations on the seals 6 without interacting with the material which forms the profiled bar 3. This allows the selection, for the rotary tool 10, of the material, shape and operating parameters which best adapt to the elastomeric material of the seals 6, irrespective of the material of the profiled bars 3.

The rotary tool 10 is therefore a specific tool for the seals 6, that is to say, a tool dedicated to the seals 6, selected for performing on the seals 6 the required operations with a good degree of finishing, in particular leaving on the seals 6 good quality cut edges.

The mechanical working operations required on the profiled bars 3 will, on the other hand, be carried out using specific tools, selected as a function of the material of the profiled bars 3 and the type of working operations to be performed.

The rotary tool 10 is generally configured to perform cutting operations on the seals 6 for cutting at least a portion of the seal 6.

In a first embodiment, the rotary tool 10 may be configured to act on a frayed edge of the seal 6, for example on an edge of the seal 6 which has been cut in an inappropriate manner during a previous working operation to which the profiled bar 3 has been subjected. This allows to remove from the seal 6 pieces of elastomeric material or portions of elastomeric material which are already partly detached, that could subsequently prove to be problematic. For example, the portions of elastomeric material already partly detached might not be completely melted on the welding machine 7 and might therefore give rise to localised hardening or, more generally, imperfections on the welded joint resulting from the joining of two adjacent profiled bars 3. These imperfections, as well as reducing the quality of the welded joint, might create drawbacks during subsequent operations to be performed on the frame, such as, for example, the fitting and the locking of a pane of glass.

The frayed edges on the seal 6 might have been formed when cutting the extruded semi-finished product 5 to obtain the profiled bars 2, or during other working operations to which the profiled bar 3 has been subjected.

In an alternative embodiment, the rotary tool 10 may be configured to act on an un-frayed edge of the seal 6, for example on an edge of the seal 6 which has been previously cut with a good quality of cut, or on a portion of the seal 6 which has not yet been subjected to cutting operations.

In particular, the rotary tool 10 may be configured to cut portions of the seals 6 close to an end section 14 of the profiled bar 3 at which the profiled bar 3 must be welded to a further profiled bar 3. This operation is performed so as to minimise the elastomeric material of the seals 6 close to the end sections 14 of the profiled bars 3 to be joined. In effect, the elastomeric material which forms the seals 6 behaves differently from the material of the profiled bars 3 during welding. In particular, the elastomeric material of the seals 6 could crystallise during welding, in which case the crystallised elastomeric material would result in undesired hardening on the welded joint.

Additional working operations may also be performed on the profiled bars 3, involving chip removal, as well as cutting operations for cutting the extruded semifinished product 5 which occurs in the cutting unit 4.

For example, in an embodiment, milling operations may be performed on the profiled bars 3.

The milling operations may optionally be performed to obtain, along an outer profile of an end section 14 of the profiled bar 3, a seat intended to house at least partly a welding bead formed when the profiled bar 3 is joined to a further profiled bar 3. In this case, the milling operations can also be called "contouring operations", since they are carried out along the contour of a cross-section of the profiled bar 3, that is to say, the end section 14.

In order to prevent that, at the end of the contouring operations, a frayed edge remains on the seals 6, it is possible to cut portions of seals 6 using a dedicated tool, near the regions in which the milling operations must be performed, in particular near the end section 14.

In this case, it is possible to use a single tool device 15, of the type shown in Figures 5 and 6.

The tool device 15 has a first end 16 intended to be fixed to a spindle, in particular an electric spindle, of a machine tool. The tool device 15 has a body 17 which extends mainly along a longitudinal axis Z. At a second end 18 of the body 17, opposite to the first end 16, a milling cutter 19 is provided for performing milling operations on the profiled bars 3.

The tool device 15 also comprises a circular blade 111, identical to the circular blade 11 shown in Figures 2 to 4, located in a position interposed between the first end 16 and the second end 18.

The tool device 15 can be rotated about the longitudinal axis Z by the spindle of the machine tool on which it is mounted. By rotating the tool device 15 it is possible to simultaneously rotate both the cutter 19 and the circular blade 111.

The tool device 15 is controlled by a controller, which may be associated with the machine tool on which the tool device 15 is mounted, so as to interact with a profiled bar 3 according to a desired path and with desired working parameters.

The tool device 15 may be brought to interact with the profiled bar 3 according to two different working methods. According to a first working method, shown in Figure 7, the circular blade 111 is brought to interact with the seal 6 so as to cut portions of seal 6.

According to a second working method, shown in Figure 8, the tool device 15 can be moved in such a way that the milling cutter 19 interacts with the end section 14 of the profiled bar 3 to make on it the seat 20 in which the welding bead can be received.

According to the example shown, the circular blade 111 cuts firstly the portions of seal 6 arranged close to the end section 14 on which the milling cutter 9 shall act. Subsequently, the milling cutter 9 performs the contouring operations on the end section 14, in such a way as to not be obstructed by the seals 6 and not to determine a poor quality cut of the seals 6.

It is also possible to reverse this working operations order, if desired.

The tool device 15 allows both the contouring operations and the cutting of the seals 6 to be performed, with a single device and, therefore, quickly, which makes it possible to obtain a good quality welded joint.

The tool device 15 could be positioned in the working unit 9.

It is also possible to adopt a layout different from that described above and shown in Figure 1.

For example, the working unit 9 could be integrated in the cutting unit 4, in which case both the cutting of the extruded semi-finished product 5 and the cutting of the seals 6 could be performed in a single operating unit, and also any milling operations such as, for example, the contouring operations on the end sections 14, if these operations (milling and, if necessary, contouring) are provided.

The cutting unit 4, and, if necessary, the working unit 9 integrated in it or associated with it, may be located in a position different from the welding machine 7 and far from the welding machine 7, so that the cutting of the profiled bars 3 and, if necessary, the seals 6 can be made at different times with respect to the welding operations.

Whatever the layout selected, using a dedicated rotary tool, that is to say, the rotary tool 10 which comprises the circular blade 11, or the circular blade 111 of the tool device 15, it is possible to minimise or even avoid the defects which may form on the frame 2 due to the presence of the seal 6 close to the welded joint. This does not result in substantial productivity losses with respect to a traditional machine, since the cutting operations performed on the seal 6 are in any case performed automatically.

## Claims

1. A method comprising the steps of:
- preparing a profiled bar (3) made of a material containing a synthetic polymer, at least one seal (6) being applied on the profiled bar (3);
- joining the profiled bar (3) to at least a further profiled bar (3), by welding, to obtain a sealed joint of a door or window frame (2);
wherein, before the joining step, there is provided a step of cutting at least a part of the seal (6), the cutting step being performed with a dedicated rotary tool (10; 111) specifically arranged to act on the seal (6), **characterized in that** the dedicated rotary tool (10; 111) comprises a circular blade (11; 111) having a smooth cutting profile.

2. The method according to claim 1, wherein the dedicated rotary tool (10; 111) is used to cut a part of the seal (6) applied to a region of the profiled bar (3) in which a working operation will be subsequently performed, said working operation resulting in removal of the material containing a synthetic polymer with which the profiled bar (3) is made.

3. The method according to claim 1, wherein the dedicated rotary tool (10; 111) is used to cut a part of the seal (6) applied to a region of the profiled bar (3) in which a working operation has been performed, said working operation resulting in removal of the material containing a synthetic polymer with which the profiled bar (3) is made.

4. The method according to claim 2 or 3, wherein the working operation which results in chip removal is a milling operation.

5. The method according to any one of claims 2 to 4, wherein the working operation which results in chip removal is a contouring operation for forming, along an outer profile of an end section (14) of the profiled bar (3), a seat (20) intended to at least partly house a welding bead formed when the profiled bar (3) is joined to the further profiled bar (3).

6. The method according to claim 1, wherein the dedicated rotary tool (10; 111) is used to cut a part of the seal (6) applied close to an end section (14) of the profiled bar (3) intended to be joined to the further profiled bar (3).

7. The method according to any preceding claim, wherein the dedicated rotary tool (10; 111) is moved along a predetermined path in order to be brought to interact with the seal (6).

8. The method according to any preceding claim, wherein the dedicated rotary tool (10; 111) is integrated in a tool device (15) comprising a body (17) having a first end (16) and a second end (18) opposite the first end (16), the first end (16) being intended to be fixed to a spindle (20) of a machine tool, a milling cutter (19) being arranged at the second end (18) for performing a milling operation on the profiled bar (3), the dedicated rotary tool (111) being interposed between the milling cutter (19) and the first end (16).

9. A plant for forming door or window frames (2) starting from profiled bars (3) made with a material containing a synthetic polymer, the plant (1) comprising a cutting unit (4) for cutting a profiled bar (3) to a desired length, a welding machine (7) for joining a profiled bar (3) to at least a further profiled bar (3) by welding, the plant (1) further comprising a work device (21) which includes a rotary tool (10; 111) for cutting at least a portion of a seal (6) applied on the profiled bar (3), **characterized in that** the rotary tool (10; 111) comprises a circular blade (11; 111) having a smooth cutting profile.

10. The plant according to claim 9, wherein the rotary tool (10; 111) is integrated in a tool device (15) comprising a body (17) having a first end (16) and a second end (18) opposite the first end (16), the first end (16) being intended to be fixed to a spindle (20) of a machine tool, a milling cutter (19) being arranged at the second end (18) for performing a milling operation on the profiled bar (3), the dedicated rotary tool (111) being interposed between the milling cutter (19) and the first end (16).

11. A tool device for processing a profiled bar (3) made of a material containing a synthetic polymer, the tool device (15) comprising a first end (16) intended to be fixed to a spindle of a machine tool, a milling cutter (19) being arranged at a second end (18) of the tool device (15) for performing a milling operation on the profiled bar (3), the second end (18) being opposite the first end (16), **characterized in that** the tool device (15) further comprises a rotatable circular blade (111) interposed between the first end (16) and the milling cutter (19) for cutting a seal (6) made of elastomeric material applied on the profiled bar (3).

## Patentansprüche

1. Verfahren, folgende Schritte umfassend:
- Vorbereiten eines Profilstabs (3), der aus einem Material hergestellt ist, das ein synthetisches Polymer enthält, wobei zumindest eine Dichtung (6) auf den Profilstab (3) aufgebracht ist;
- Verbinden des Profilstabs (3) mit zumindest einem weiteren Profilstab (3) durch Schweißen, um eine abgedichtete Verbindung eines Tür- oder Fensterrahmens (2) zu erhalten;
wobei vor dem Verbindungsschritt ein Schritt zum Schneiden zumindest eines Teils der Dichtung (6) vorgesehen ist, wobei der Schneideschritt mit einem speziellen Rotationswerkzeug (10; 111) ausgeführt wird, das insbesondere so angeordnet ist, dass es auf die Dichtung (6) einwirkt, **dadurch gekennzeichnet, dass** das spezielle Rotationswerkzeug (10; 111) eine kreisförmige Klinge (11; 111) umfasst , die ein glattes Schneidprofil aufweist.

2. Verfahren nach Anspruch 1, wobei das spezielle Rotationswerkzeug (10; 111) zum Schneiden eines Teils der Dichtung (6) verwendet wird, die auf einen Bereich des Profilstabs (3) aufgebracht ist, in dem anschließend ein Arbeitsvorgang durchgeführt wird, wobei dieser Arbeitsvorgang eine Abnahme des Materials bewirkt, das ein synthetisches Polymer enthält, aus dem der Profilstab (3) hergestellt ist.

3. Verfahren nach Anspruch 1, wobei das spezielle Rotationswerkzeug (10; 111) zum Schneiden eines Teils der Dichtung (6) verwendet wird, die auf einen Bereich des Profilstabs (3) aufgebracht ist, in dem ein Arbeitsvorgang durchgeführt wurde, wobei dieser Arbeitsvorgang eine Abnahme des Materials bewirkt, das ein synthetisches Polymer enthält, aus dem der Profilstab (3) hergestellt ist.

4. Verfahren nach Anspruch 2 oder 3, wobei der Arbeitsvorgang, der eine Spanabnahme bewirkt, ein Fräsvorgang ist.

5. Verfahren nach einem der Ansprüche 2 bis 4, wobei der Arbeitsvorgang, der eine Spanabnahme bewirkt, ein Konturierungsvorgang ist, um entlang eines Außenprofils eines Endabschnitts (14) des Profilstabs (3) einen Sitz (20) zu formen, der dazu bestimmt ist, zumindest teilweise eine Schweißnaht aufzunehmen, die entsteht, wenn der Profilstab (3) mit dem weiteren Profilstab (3) verbunden wird.

6. Verfahren nach Anspruch 1, wobei das spezielle Rotationswerkzeug (10; 111) zum Schneiden eines Teils der Dichtung (6) verwendet wird, die in der Nähe eines Endabschnitts (14) des Profilstabs (3) aufgebracht ist, der dazu bestimmt ist, mit dem weiteren Profilstab (3) verbunden zu werden.

7. Verfahren nach einem beliebigen der vorhergehenden Ansprüche, wobei das spezielle Rotationswerkzeug (10; 111) entlang einer vorbestimmten Bahn bewegt wird, um mit der Dichtung (6) in Wechselwirkung gebracht zu werden.

8. Verfahren nach einem beliebigen der vorhergehenden Ansprüche, wobei das spezielle Rotationswerkzeug (10; 111) in eine Werkzeugvorrichtung (15) integriert ist, die einen Körper (17) umfasst, der ein erstes Ende (16) und ein dem ersten Ende (16) gegenüberliegendes zweites Ende (18) aufweist, wobei das erste Ende (16) dafür bestimmt ist, an einer Spindel (20) einer Werkzeugmaschine befestigt zu werden, wobei ein Fräser (19) an dem zweiten Ende (18) angeordnet ist, um einen Fräsvorgang an dem Profilstab (3) durchzuführen, wobei das spezielle Rotationswerkzeug (111) zwischen dem Fräser (19) und dem ersten Ende (16) angeordnet ist.

9. Anlage zum Herstellen von Tür- oder Fensterrahmen (2) ausgehend von Profilstäben (3), die aus einem Material hergestellt sind, das ein synthetisches Polymer enthält, wobei die Anlage (1) eine Schneideinheit (4) für das Schneiden eines Profilstabs (3) auf eine gewünschte Länge umfasst, und eine Schweißmaschine (7) zum Verbinden eines Profilstabs (3) mit mindestens einem weiteren Profilstab (3) durch Schweißen, wobei die Anlage (1) ferner eine Arbeitsvorrichtung (21) umfasst, die ein Rotationswerkzeug (10; 111) zum Schneiden zumindest eines Abschnitts einer auf den Profilstab (3) aufgebrachten Dichtung (6) beinhaltet, **dadurch gekennzeichnet, dass** das Rotationswerkzeug (10; 111) eine kreisförmige Klinge (11; 111) umfasst, die ein glattes Schneidprofil aufweist.

10. Anlage nach Anspruch 9, wobei das Rotationswerkzeug (10; 111) in eine Werkzeugvorrichtung (15) integriert ist, die einen Körper (17) umfasst, der ein erstes Ende (16) und ein dem ersten Ende (16) gegenüberliegendes zweites Ende (18) aufweist, wobei das erste Ende (16) dafür bestimmt ist, an einer Spindel (20) einer Werkzeugmaschine befestigt zu werden, wobei ein Fräser (19) an dem zweiten Ende (18) angeordnet ist, um einen Fräsvorgang an dem Profilstab (3) durchzuführen, wobei das spezielle Rotationswerkzeug (111) zwischen dem Fräser (19) und dem ersten Ende (16) angeordnet ist.

11. Werkzeugvorrichtung zur Bearbeitung eines Profilstabs (3) der aus einem Material hergestellt ist, das ein synthetisches Polymer enthält, wobei die Werkzeugvorrichtung (15) ein erstes Ende (16) umfasst, das dafür bestimmt ist, an einer Spindel einer Werkzeugmaschine befestigt zu werden, wobei ein Fräser (19) an einem zweiten Ende (18) der Werkzeugvorrichtung (15) angeordnet ist, um einen Fräsvorgang an dem Profilstab (3) durchzuführen, wobei das zweite Ende (18) dem ersten Ende (16) gegenüberliegt, **dadurch gekennzeichnet, dass** die Werkzeugvorrichtung (15) ferner eine drehbare kreisförmige Klinge (111) umfasst, die zwischen dem ersten Ende (16) und dem Fräser (19) angeordnet ist, um eine Dichtung (6) zu schneiden, die aus einem Elastomermaterial hergestellt und auf den Profilstab (3) aufgebracht ist.

## Revendications

1. Un procédé comprenant les étapes consistant à :
- préparer une barre profilée (3) réalisée dans un matériau contenant un polymère synthétique, au moins un joint (6) étant appliqué sur la barre profilée (3) ;
- joindre la barre profilée (3) à au moins une autre barre profilée (3), par soudage, pour obtenir une jonction soudée d'un cadre (2) de porte ou de fenêtre ;
dans lequel, avant l'étape de jonction, il y a une étape consistant à couper au moins une partie du joint (6), l'étape de coupe étant effectuée à l'aide d'un outil rotatif dédié (10 ; 111) disposé de façon spécifique pour agir sur le joint (6), **caractérisé en ce que** l'outil de coupe dédié (10 ; 111) comprend une lame circulaire (11 ; 111) ayant un profil de coupe lisse.

2. Le procédé selon la revendication 1, dans lequel l'outil rotatif dédié (10 ; 111) est utilisé pour couper une partie du joint (6) appliqué à une région de la barre profilée (3) dans laquelle une opération d'usinage sera ensuite exécutée, ladite opération d'usinage consistant en un enlèvement du matériau contenant un polymère synthétique avec lequel la barre profilée (3) est réalisée.

3. Le procédé selon la revendication 1, dans lequel l'outil rotatif dédié (10 ; 111) est utilisé pour couper une partie du joint (6) appliqué à une région de la barre profilée (3) dans laquelle une opération d'usinage a été exécutée, ladite opération d'usinage consistant en un enlèvement du matériau contenant un polymère synthétique avec lequel la barre profilée (3) est réalisée.

4. Le procédé selon la revendication 2 ou 3, dans lequel l'opération d'usinage qui consiste en un enlèvement de copeaux est une opération de fraisage.

5. Le procédé selon l'une quelconque des revendications de 2 à 4, dans lequel l'opération d'usinage qui consiste en un enlèvement de copeaux est une opération de contournage pour former, le long d'un profil extérieur d'une section d'extrémité (14) de la barre profilée (3), un siège (20) destiné à loger au moins en partie un cordon de soudure formé lorsque la barre profilée (3) est jointe à l'autre barre profilée (3).

6. Le procédé selon la revendication 1, dans lequel l'outil rotatif dédié (10 ; 111) est utilisé pour couper une partie du joint (6) appliqué à proximité d'une section d'extrémité (14) de la barre profilée (3) destinée à être jointe à l'autre barre profilée (3).

7. Le procédé selon l'une quelconque des revendications précédentes, dans lequel l'outil rotatif dédié (10 ; 111) est déplacé le long d'un parcours prédéfini de manière à l'amener à agir avec le joint (6).

8. Le procédé selon l'une quelconque des revendications précédentes, dans lequel l'outil rotatif dédié (10 ; 1111) est intégré dans un outillage (15) comprenant un corps (17) ayant une première extrémité (16) et une deuxième extrémité (18) opposée à la première extrémité (16), la première extrémité (16) étant destinée à être fixée à une broche (20) d'une machine-outil, une fraise (19) étant disposée au niveau de la deuxième extrémité (18) pour exécuter une opération de fraisage sur la barre profilée (3), l'outil rotatif dédié (111) étant interposé entre la fraise (19) et la première extrémité (16).

9. Une installation pour former des cadres (2) de porte ou de fenêtre à partir de barres profilées (3) réalisées avec un matériau contenant un polymère synthétique, l'installation (1) comprenant un groupe de coupe (4) pour couper une barre profilée (3) à une longueur voulue, une machine à souder (7) pour joindre une barre profilée (3) à au moins une autre barre profilée (3) par soudage, l'installation (1) comprenant en outre un dispositif de travail (21) qui inclut un outil rotatif (10 ; 111) pour couper au moins une portion d'un joint (6) appliqué sur la barre profilée (3), **caractérisée en ce que** l'outil rotatif (10 ; 111) comprend une lame circulaire (11 ; 111) ayant un profil de coupe lisse.

10. L'installation selon la revendication 9, dans laquelle l'outil rotatif (10 ; 111) est intégré dans un outillage (15) comprenant un corps (17) ayant une première extrémité (16) et une deuxième extrémité (18) opposée à la première extrémité (16), la première extrémité (16) étant destinée à être fixée à une broche (20) d'une machine-outil, une fraise (19) étant disposée au niveau de la deuxième extrémité (18) pour exécuter une opération de fraisage sur la barre profilée (3), l'outil rotatif dédié (111) étant interposé entre la fraise (19) et la première extrémité (16).

11. Un outillage pour préparer une barre profilée (3) réalisée dans un matériau contenant un polymère synthétique, l'outillage (15) comprenant une première extrémité (16) destinée à être fixée à une broche d'une machine-outil, une fraise (19) étant disposée au niveau d'une deuxième extrémité (18) de l'outillage (15) pour exécuter une opération de fraisage sur la barre profilée (3), la deuxième extrémité (18) étant opposée à la première extrémité (16), **caractérisé en ce que** l'outillage (15) comprend en outre une lame circulaire rotative (111) interposée entre la première extrémité (16) et la fraise (19) pour couper un joint (6) réalisé dans un matériau élastomère appliqué sur la barre profilée (3).
